(19) Europäisches Patentamt
European Patent Office
Office européen des brevets

(11) Veröffentlichungsnummer: **0 002 015**
**A1**

(12) # EUROPÄISCHE PATENTANMELDUNG

(21) Anmeldenummer: **78101307.3**

(22) Anmeldetag: **04.11.78**

(51) Int. Cl.$^2$: **C 08 C 1/15**

(30) Priorität: **19.11.77 DE 2751786**

(43) Veröffentlichungstag der Anmeldung: **30.05.79 Patentblatt 79/11**

(84) Benannte Vertragsstaaten: **BE DE FR GB NL**

(71) Anmelder: **Bayer Aktiengesellschaft, Zentralbereich Patente,Marken und Lizenzen Bayerwerk, D-5090 Leverkusen 1 (DE)**

(72) Erfinder: **Müller, Ernst-Willi, Dr., Heymannstrasse 67, D-5090 Leverkusen 1 (DE)**
Erfinder: **Plato, Horst, Dr., Heymannstrasse 40, D-5090 Leverkusen 1 (DE)**
Erfinder: **Schüchter, Johann, Willi-Baumeister-Strasse 20, D-5090 Leverkusen 1 (DE)**
Erfinder: **Sendzik, Bernd, Ing.-grad., Flurstrasse 34, D-5090 Leverkusen 17 (DE)**

(54) **Verfahren zur Isolierung von Kautschuken.**

(57) Ein Verfahren zur Isolierung von Kautschuken aus ihren wässrigen Dispersionen durch Zugabe von Alkylcellulose oder Hydroxyalkylcellulose und einer kleinen Menge eines wasserlöslichen Calciumsalzes, Ausfällung des Kautschuks durch Zugabe von Wasser und Abtrennung und Trocknung des ausgefällten Kautschuks.

EP 0 002 015 A1

ACTORUM AG

BAYER AKTIENGESELLSCHAFT
Zentralbereich
Patente, Marken und Lizenzen

5090 Leverkusen, Bayerwerk
Kb/Th

Verfahren zur Isolierung von Kautschuken

Die vorliegende Erfindung betrifft ein Verfahren zur Isolierung von Kautschuken aus ihren wässrigen Dispersionen (Latices) unter Verwendung von (Hydroxy-) Alkylcellulose und eines wasserlöslichen Calciumsalzes.

Aus der DT-OS 2 332 096 ist es bereits bekannt, daß Kautschuke aus ihren wässrigen Dispersionen mit Hilfe von Methylcellulose und eines wasserlöslichen Alkali-, Erdalkali-, Aluminium- oder Zinksalzes ausgefällt werden können. Anstelle der Methylcellulose können gemäß DOS 2 425 441 auch wasserlösliche $C_2$- bis $C_4$- Alkylcellulosen oder Hydroxylalkylcellulosen verwendet werden.

Es wurde nun gefunden, daß die Ausfällung von Kautschuken unter Verwendung von (Hydroxy-) Alkylcellulosen mit äußerst geringen Salzmengen durchgeführt werden kann, wenn ein wasserlösliches Calciumsalz verwendet wird.

Gegenstand der Erfindung ist ein Verfahren zur Isolierung von Monoolefin- und Dien-Kautschuken aus ihren wäßrigen Dispersionen (Latices) mit Hilfe von (Hydroxy-) Alkylcellulosen und einem wasserlöslichen Salz, dadurch gekennzeichnet, daß man einer wässrigen Kautschukdispersion (Hydroxy-) Alkylcellulose in einer Menge von 0,1 - 10 Gew.-%, bezogen auf Kautschuk, und gleichzeitig ein wasserlösliches Calciumsalz in einer Menge von 0,02 - 0,25 Gew.-%, bezogen auf Kautschuk zufügt, die Mischung mit Wasser versetzt, bis der Kautschuk ausfällt und den Kautschuk abtrennt und in üblicher Weise trocknet.

Das erfindungsgemäße Verfahren hat gegenüber bekannten Verfahren den Vorteil, daß zur Ausfällung des Kautschuks sowohl weniger Alkylcellulose als auch Wasser benötigt werden. Überraschenderweise führt die Verwendung des Calciumsalzes nicht zu der sonst auftretenden Verschlechterung der Eigenschaften des Kautschuks. Man erhält vielmehr einen Kautschuk, bei dem z.B. die Vulkanisationseigenschaften nicht beeinträchtigt und voll zufriedenstellend sind.

In einer üblichen Ausführungsform des Verfahrens fügt man der Mischung aus Kautschukdispersion zunächst 0,1 - 10 Gew.-%ige wässrige Lösung von Methylcellulose, in der das wasserlösliche Calciumsalz gelöst ist, in solcher Menge zu, daß die Mischung 0,1 - 10 Gew.-%, bevorzugt 0,1 - 5 Gew.-% Methylcellulose, bezogen auf den Kautschuk, enthält und mischt die erhaltene Mischung mit Wasser in einer solchen Menge, daß der Kautschuk ausfällt. Das Gewichtsverhältnis Methylcellulose : Salz in der wässrigen Methylcelluloselösung ist bevorzugt 10 : 1 bis 20 : 1. Das Koagulat wird dann mechanisch abgetrennt, gegebenenfalls mit Wasser gewaschen und das restliche Wasser entzogen. Es entsteht dann ein Koagulat, das von Fremdbestandteilen, wie Emulgatoren, Katalysatorresten und dergleichen fast vollständig frei ist. Solche Fremdstoffe werden zusammen mit dem Wasser beim Abtrennen des Koagulats entfernt und etwa noch verbleibende Reste können mit Wasser ausgewaschen werden.

Kautschuke im Sinne der vorliegenden Erfindung sind alle Synthesekautschuke auf der Basis von Monoolefinen und Dienen, die als Elastomer, Binde- oder Beschichtungsmittel eingesetzt oder verwendet werden. Beispiele hierfür sind Dienkautschuke wie Homopolymerisate von konjugierten Diolefinen mit vorzugsweise 4 - 8 Kohlenstoffatomen (Butadien, Isopren, Piperylen, Chloropren) und Copolymerisate konjugierter Diolefine mit äthylenisch ungesättigten Verbindungen, z.B. aliphatischen Vinylverbindungen und Vinylaromaten. Als Beispiele seien genannt: Acryl- und Methacrylsäurederivate wie Acrylnitril, Acrylamid, Methacrylnitril, Methacrylamid, Acrylsäurealkylester mit 1 - 6 C-Atomen (Äthylacrylat, Butylacrylat) Methacrylsäurealkylester mit 1 - 6 C-Atomen (Methylmethacrylat), weiterhin Styrol, α-Methylstyrol, Vinyltoluol, Vinylpyridin, Divinylbenzol, ferner Copolymere von Äthylen mit Vinylacetat oder Vinylchlorid oder Copolymere von Acrylestern.

Aus dieser Gruppe von Kautschuken sind bevorzugt: Polybutadien, Styrolbutadiencopolymere, Butadienacrylnitrilcopolymere, Polychloropren, Polyisopren und Acrylestercopolymere. Alle diese Kautschuke können in beliebiger sterischer Konfiguration vorliegen. Hiermit ist gemeint, daß die Anordnung der Doppelbindungen cis oder trans sein kann, daß die Diene in 1,4-, 3,4- oder 1,2-Stellung polymerisiert sein können und daß im Falle von Copolymerisaten die Verteilung der Monomerbausteine statistisch, altenierend oder blockweise sein kann.

Geeignete Monoolefinkautschuke sind solche aus α-Olefinen wie Äthylen und Propylen und cyclischen Olefinen wie Cyclopenten. Beispielhaft seien genannt:

Äthylen-, Propylenkautschuke und Äthylen-, Propylenterpolymerisate. Das Verhältnis von Äthylen zu Propylen ist im allgemeinen 80 : 20 bis

20 : 80, die Terkomponente ist bevorzugt in Mengen von 2 - 20 Gew.-% vorhanden und stellt ein nichtkonjugiertes Diolefin, wie Norbornadien, 1,4-Hexadien oder Äthylidennorbornen dar.

Ebenfalls geeignet sind Polyalkenamerkautschuke, die aus der ringöffnenden Polymerisation von cyclischen Olefinen erhalten werden. Von besonderem Interesse sind Homopolymerisate von Cyclomonoolefinen mit 4,5 und 7 - 12 C-Atomen, z.B. Transpolypentenamer. Diese durch Lösungspolymerisation mit metallorganischen Mischkatalysatoren oder mit Metallalkylen hergestellten Kautschuke werden nach an sich bekannten Verfahren mit Hilfe von bekannten Emulgatoren oder entsprechend der DE-OS 20 13 359 in lösungsmittelfreie Dispersionen bzw. Latices überführt. Diese Dispersionen können dann der Erfindung gemäß weiterverarbeitet werden.

Die genannten Kautschuke können bis zu 50 Gew.-% an den bekannten Streckölen (z.B. paraffinische oder aromatische Mineralöle) oder übliche Weichmacher (wie Dioctylphthalat oder Trikrezylphosphat oder niedermolekulare Polyäther) enthalten, ferner können diesen Kautschuken bereits die bekannten Vulkanisationssysteme ganz oder teilweise einverleibt sein.

Mikrostruktur, Molekulargewicht und Gelgehalt der Polymeren sind nicht kritisch. Es können Kautschuktypen mit niedrigem Molgewicht bis herab zu einigen 1000 verwendet werden.

Viele dieser Kautschuke fallen bei ihrer Herstellung als wäßrige Dispersion (Latex) an oder können leicht in Latexform gebracht werden. Diese Latices enthalten im allgemeinen 10 - 60 Gew.-% Kautschuk, bezogen auf die gesamte Latexmenge.

Da Kautschuke im Rohzustand klebrige Produkte sind, ist ihre Isolierung als Feststoff aus Lösungen in organischen Lösungsmitteln oder aus Latices recht schwierig. Man erhält bei solchen Aufarbeitungsverfahren den Kautschuk im allgemeinen in Form klebriger Krümel.

Das Verfahren der Erfindung wird bevorzugt auf Kautschuklatices angewendet, die mit anionischen Emulgatoren stabilisiert sind. Beispiele für solche Emulgatoren, die bevorzugt in Mengen von 0.1 - 5 Gew.-%, bezogen auf Kautschuk eingesetzt werden, sind Salze von langkettigen Fettsäuren, Harzsäuren, disproportionierten Abietinsäuren und ihren Kondensaten mit Formaldehyd, Alkyl- und Alkylarylsulfonaten und -sulfaten. Besonders bevorzugt sind die Salze von $C_{12}$-$C_{24}$-Fettsäuren, von Harzsäuren und von Gemischen disproportionierter Abietinsäuren.

Solche Latices und ihre Herstellung sind bekannt. Im Prinzip gibt man zu ihrer Herstellung zu einer wässrigen Emulsion, die die Monomeren und den Emulgator enthält, einen Aktivator und stellt den Feststoffgehalt der so erhaltenen Polymerdispersion auf die gewünschte Konzentration (z.B. 30 - 60 Gew.-%) ein.

Man kann nach Ende der Polymerisation die Restmonomeren entfernen, das Molekulargewicht des Polymerisats während der Polymerisation durch Regler beeinflussen, dem Latex Stabilisatoren und/oder Alterungsschutzmittel zufügen. Es ist auch möglich, Füllstoffe (Ruß, Silicate), Feststoffe, Vulkanisationsmittel und Vulkanisationsbeschleuniger einzumischen.

Für das Verfahren der Erfindung geeignete Cellulosederivate sind Methylcellulosen und wasserlösliche $C_2$ - bis $C_4$ - Alkyl- bzw. Hydroxyalkylcellulosen.

Die Methylcellulosen sind nach bekannten Verfahren hergestellte, im Handel erhältliche Cellulosederivate mit einem Substitutionsgrad zwischen 0,8 und 2,0, d.h. jede Cellulosegrundeinheit hat im Mittel 0,8 bis 2,0 Methoxylgruppen. Das

Molekulargewicht der Methylcellulose ist ebenfalls nicht kritisch. Bestimmt man das Molgewicht durch die Viskosität einer 2 %igen wäßrigen Lösung, so kann die Viskosität zwischen 10 und 10.000 cp liegen. Vorzugsweise werden jedoch Methylcellulosen verwendet, die in der Viskosität zwischen 1.500 und 4.000 cp liegen.

Wasserlösliche $C_2$- bis $C_4$-Alkylcellulosen im Sinne der Erfindung sind Celluloseäther, in denen ein Teil der Hydroxylgruppen der Cellulose mit $C_2$- bis $C_4$-Alkylresten veräthert ist. Besonders geeignet sind Äthyl-, Propyl- und Butylcellulosen. Wasserlösliche Hydroxyalkylcellulosen im Sinne der Erfindung sind Celluloseäther, in denen ein Teil der Hydroxylgruppen der Cellulose mit Hydroxyalkylresten veräthert ist. Hydroxyalkylreste sind bevorzugt geradkettige oder verzweigte Alkylreste mit 2 bis etwa 10 C-Atomen, in denen einzelne $-CH_2-$ Gruppen auch durch -O- ersetzt sein können, die eine Hydroxylgruppe als Substituent tragen. Die Hydroxylgruppe kann primär oder sekundär sein. Beispiele für solche Reste sind:

$-CH_2-CH_2-OH$ ; $-CH_2-CH_2-O-CH_2-CH_2-OH$;

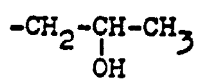 und 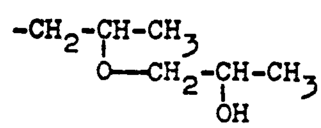 .

Der Substitutionsgrad der Alkyl- bzw. Hydroxyalkylcellulosen ist bevorzugt 0,5 bis 3, d. h. jede Glukoseeinheit der Cellulosen trägt im Durchschnitt 0,5 bis 3 Alkyl- bzw. Hydroxyalkylsubstituenten.

Das Molekulargewicht der Alkyl- bzw. Hydroxyalkylcellulosen wird bevorzugt so gewählt, daß eine 5-%ige Lösung des Celluloseäthers in Wasser bei 20°C eine Viskosität von 100 bis 100.000 cp besitzt. Besonders bevorzugt sind solche Celluloseäther, deren Löslichkeit in Wasser mit steigender Temperatur von 20 bis 80°C stark abnimmt.

Die Verwendung von Methylcellulose ist bevorzugt.
Als wasserlösliches Salz wird bei dem erfindungsgemäßen Verfahren zur Isolierung von Kautschuken ein wasserlösliches Calciumsalz verwendet. Geeignete Calciumsalze sind beispielsweise Calciumchlorid, Calciumnitrat, Calciumformat und Calciumacetat. Die Verwendung von Calciumchlorid ist bevorzugt. Das Calciumsalz wird in einer Menge von 0,02 - 0,25 Gew.-%, bevorzugt von 0,1 - 0,2 Gew.-%, bezogen auf Kautschuk eingesetzt.

Das erfindungsgemäße Verfahren kann sowohl kontinuierlich als diskontinuierlich durchgeführt werden. Beispielsweise kann man wie folgt verfahren:
Man fügt einem Kautschuklatex Methylcellulose und gleichzeitig ein wasserlösliches Calciumsalz zu, wobei die Methylcellulosemenge so bemessen ist, daß 0,1 - 10, bevorzugt 0,1 - 2,5 Gew.-Teile Methylcellulose und 0,02 - 0,25 Gew.-Teile, bevorzugt 0,1 - 0,2 Gew.-Teile des Salzes pro 100 Teile Kautschuk vorhanden sind. Dabei ist die Menge des Salzes, bezogen auf Methylcellulose 5 - 10 Gew.-Teile pro 100 Gew.-Teile. Man kann die Methylcellulose als wässrige Lösung zugeben, in der auch das Salz gelöst ist. Es ist aber auch möglich, ein festes Gemisch aus Methylcellulose und Salz zu verwenden. Bevorzugt stellt man ein solches Gemisch her durch Sprühtrocknung einer wässrigen Methylcelluloselösung, die das Salz gelöst enthält. Das so erhaltene poröse feste Produkt ist besonders leicht in Wasser löslich. Zur Verbesserung der Löslichkeit kann man zusätzlich noch eine geringe Menge, bevorzugt 1 - 15 Gew.-%, bezogen auf Methylcellulose eines mehrwertigen Alkohols, wie Äthylenglykol, Glycerin, Polyäthylenglykol oder Polyglykoläther zusetzen. Wenn man das so erhaltene Produkt dem Latex zufügt, ist es günstig es vor dem Zusatz mit einer geringen Wassermenge anzurühren, die vorteilhafterweise eine Temperatur von 60 - 100°C hat.

Fügt man dem Methylcellulose- und Salz-haltigen Latex Wasser zu, so fällt der Kautschuk aus. Es entstehen dabei Teilchen von etwa 3 mm bis etwa 100 µ Durchmesser. Je nach spezifischem Gewicht des Kautschuks rahmt das Koagulat auf (d.h. es sammelt sich an der Oberfläche der Flüssigkeit) oder es sedimentiert ab und kann leicht von der Hauptmenge der entstandenen wässrigen Phase abgetrennt werden. Auf diese Weise werden auch alle Verunreinigungen, die der Kautschuklatex enthält, weitgehend mit entfernt, soweit sie wasserlöslich sind. Dies gilt insbesondere für die Emulgatoren und für wasserlösliche Katalysatorrückstände. Außerdem kleben die so erhaltenen Koagulatteilchen nicht zusammen. Zur weiteren Reduzierung ihres Gehalts an Fremdstoffen können sie noch einmal mit Wasser gewaschen werden. Die noch stark wasserhaltigen Teilchen werden anschließend getrocknet. Wenn man bei diesem Trocknungsprozeß die Kautschukteilchen in Bewegung hält und dadurch ihr Zusammenbacken verhindert, entsteht ein freifließendes trockenes Kautschukpulver. Man trocknet also im "Zustand der Bewegung", den man z.B. erreicht, wenn man die Teilchen wirbelt oder rührt, d.h. einen Stromtrockner oder ein ähnlich wirkendes Gerät benutzt. Die Stärke der Bewegung kann nicht generell angegeben werden. Sie muß ausreichen, um ein Zusammenbacken zu verhindern und kann von Fall zu Fall leicht ermittelt werden. Trocknet man ohne die Teilchen zu bewegen, dann erhält man den Kautschuk in einer Form, die leicht nach üblichen Methoden zu einer kompakten Masse (etwa in Form eines Stranges) verdichtet werden kann. Das Koagulat kann auch mit den üblichen Schneckenmaschinen zu kompaktem Kautschuk weiterverarbeitet werden.

Die Größe der Teilchen hängt hauptsächlich von der zugesetzten Wassermenge ab. Diese soll bevorzugt zwischen dem 2- und dem 10-fachen Volumen der Latexmenge liegen. Weiter hängt ihre Größe ab von der Temperatur des zugefügten Wassers. Grundsätzlich kann bei Temperaturen zwischen 0 und 100°C gearbeitet werden. Bevorzugt benutzt man jedoch Wasser einer Temperatur von etwa 25 bis etwa 80°C. Die Teilchengröße nimmt mit zunehmender Wassertemperatur zu. Bevorzugt wird der Latex langsam bei starker mechanischer Durchmischung zum Wasser gegeben. Die mechanische Durchmischung kann beispielsweise durch starkes Rühren erfolgen.

Die für ein optimales Ergebnis günstigste Wassermenge, Wassertemperatur und Rührintensität muß im Einzelfall festgestellt werden. Sie hängen von der Art und von der Konzentration der Latices ab und werden auch von den vorhandenen Emulgatoren und ihrer Menge beeinflußt. Keine der genannten Maßnahmen ist so kritisch, daß nur bestimmte Kombinationen zum gewünschten Ergebnis führen. Die optimale Kombination ist auf jeden Fall durch wenige Vorversuche leicht feststellbar.

Man kann zur Durchführung des Verfahrens auch eine Kautschuklatex/Methylcellulose/Salz-Mischung direkt sprühtrocknen. Dann erhält man den Kautschuk immer in Pulverform, vermeidet das Zugeben großer Wassermengen, hält aber dafür alle vorhandenen Verunreinigungen im Kautschuk fest.

Durch das erfindungsgemäße Verfahren kann Kautschuk in Form eines leicht handhabbaren rieselfähigen Pulvers erhalten werden, so daß seine Verarbeitung und das Einmischen von Zuschlagstoffen sehr erleichtert wird.

Das erfindungsgemäße Verfahren hat den Vorteil, daß trotz der geringen verwendeten Salzmenge die Isolierung der Kautschuke mit maximaler Fällgeschwindigkeit durchgeführt werden kann, wobei gegenüber den bekannten Verfahren keine zusätzlichen Wassermengen zur Ausfällung der Kautschuke benötigt werden. Dies ist besonders wichtig bei einer

kontinuierlichen Fällung, die nach dem erfindungsgemäßen Verfahren unter optimaler Ausnutzung des Volumens der Fällkessel und ohne zusätzlichen Aufwand an Energie durchgeführt werden kann.

Außer einer geringeren Verunreinigung des Abwassers fällt auch das Produkt selbst meist in so reiner Form an, daß i.a. auf ein zusätzliches Waschen des Produktes verzichtet werden kann. Unerwarteterweise werden auch die Eigenschaften der isolierten Kautschuke durch die Verwendung eines Calciumsalzes nicht nachteilig beeinflußt. Eine Beeinträchtigung der Kautschukeigenschaften wird häufig beobachtet, wenn Polymere aus ihren Dispersionen mit Hilfe mehrwertiger Metallionen wie z.B. $Ca^{2+}$ oder $Al^{3+}$ ausgefällt werden (vgl. Houben-Weyl (1961), Methoden der Org. Chemie, Makromolekulare Stoffe 1, S. 484/485). Demgegenüber erhält man nach dem erfindungsgemäßen Verfahren Kautschuke, die keine Verzögerung oder Verschlechterung , z.B. bei der Anvulkanisation und/oder Ausvulkanisation,aufweisen.

Patentansprüche

1. Verfahren zur Isolierung von Monoolefin- und Dien-Kautschuken aus ihren wäßrigen Dispersionen (Latices) mit Hilfe von (Hydroxy-)Alkylcellulose und einem wasserlöslichen Salz, dadurch gekennzeichnet, daß man einer wäßrigen Kautschukdispersion (Hydroxy) Alkylcellulose in einer Menge von 0,1 - 10 Gew.-%, bezogen auf Kautschuk, und gleichzeitig ein wasserlösliches Calciumsalz in einer Menge von 0,02-0,25 Gew.-%, bezogen auf Kautschuk, zufügt, die Mischung mit Wasser versetzt, bis der Kautschuk ausfällt und den Kautschuk abtrennt und in üblicher Weise trocknet.

2.) Verfahren nach Anspruch 1, dadurch gekennzeichnet, daß man 0,1 - 0,2 Gew.-% eines wasserlöslichen Calciumsalzes hinzufügt.

3.) Verfahren nach Anspruch 1, dadurch gekennzeichnet, daß man (Hydroxy-) Alkylcellulose und Calciumsalz der Kautschukdispersion in Form einer wässrigen Lösung zusetzt.

4.) Verfahren nach Anspruch 1, dadurch gekennzeichnet, daß man der Mischung aus Kautschukdispersion, (Hydroxy-)Alkylcellulose und Calciumsalz das Wasser direkt durch Sprühtrocknung entzieht.

0002015

Europäisches Patentamt

# EUROPÄISCHER RECHERCHENBERICHT

Nummer der Anmeldung

EP 78 10 1307

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| X | US - A - 2 814 550 (R.E. GUNDERMAN et al.)<br>* Anspruch 2, Spalte 2, Zeilen 60,61 *<br>-- | 1-3 | C 08 C 1/15 |
| X | GB - A - 1 029 477 (DU PONT DE NEMOURS)<br>* Anspruch 1 *<br>-- | 1-3 | |
| DX | DE - A - 2 332 096 (BAYER)<br>* Ansprüche 1-3,5; Seite 5, Zeile 9 *<br>-- | 1-4 | RECHERCHIERTE SACHGEBIETE (Int. Cl.²)<br>C 08 C 1/15<br>1/14<br>1/16 |
| DX | DE - A - 2 425 441 (BAYER)<br>* Ansprüche 1-3,5; Seite 6, Zeile 3 *<br>---- | 1-4 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 14-02-1979 | VAN HUMBEECK |